(19) Europäisches Patentamt
European Patent Office
Office européen des brevets

(11) **EP 4 144 887 A1**

(12) **EUROPEAN PATENT APPLICATION**

(43) Date of publication:
**08.03.2023 Bulletin 2023/10**

(21) Application number: **22175117.5**

(22) Date of filing: **24.05.2022**

(51) International Patent Classification (IPC):
**C25B 1/042** (2021.01)    **C25B 15/02** (2006.01)

(52) Cooperative Patent Classification (CPC):
**C25B 15/02; C25B 1/042;** C25B 9/73; Y02E 60/36;
Y02P 20/133

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.06.2021 JP 2021095905**

(71) Applicant: **Toshiba Energy Systems & Solutions
Corporation
Saiwai-ku
Kawasaki-shi
Kanagawa (JP)**

(72) Inventors:
• **Tsuchiya, Naomi**
  **Kawasaki-shi, Kanagawa (JP)**
• **Okabe, Hirofumi**
  **Kawasaki-shi, Kanagawa (JP)**
• **Yamada, Kazuya**
  **Minato-ku, Tokyo (JP)**

(74) Representative: **Hoffmann Eitle
Patent- und Rechtsanwälte PartmbB
Arabellastraße 30
81925 München (DE)**

(54) **HYDROGEN PRODUCTION APPARATUS AND HYDROGEN PRODUCTION METHOD**

(57)    To enable stable and efficient production of hydrogen. A hydrogen production apparatus according to an embodiment includes an electrolytic unit and an electrolysis power controller. The electrolytic unit produces hydrogen by electrolyzing steam using electric power supplied from an electric power source. The electrolysis power controller controls the supply of electric power from the electric power source to the electrolytic unit.

Here, the electrolysis power controller determines whether an unsupplied time during which electric power from the electric power source to the electrolytic unit is not supplied exceeds a predetermined set time, and starts the supply of electric power from the electric power source to the electrolytic unit when the unsupplied time exceeds the set time.

FIG.1

EP 4 144 887 A1

**Description**

FIELD

Embodiments disclosed herein relate to a hydrogen production apparatus.

BACKGROUND

In recent years, a hydrogen production apparatus has been attracting attention to enable a hydrogen energy society. For example, a hydrogen production apparatus that produces hydrogen gas and oxygen gas by electrolyzing high-temperature steam in an electrolytic unit has been proposed.

The hydrogen production apparatus may, for example, perform electrolysis using electric power from renewable energy sources (solar, wind power, or other energies). Supply of electric power from renewable energy is unstable. Therefore, the electrolytic unit is necessary to be kept at a high temperature so that hydrogen can be produced when electric power from renewable energy is supplied in the hydrogen production apparatus.

It is necessary to pre-provide steam, raw material, to the electrolytic unit to make hydrogen production feasible immediately after electric power from renewable energy is supplied. At this time, when the electrolytic unit is not performing electrolysis, a hydrogen electrode of the electrolytic unit is exposed to an oxidation atmosphere, resulting in oxidation and degradation of the hydrogen electrode. In contrast, when the electrolytic unit is performing electrolysis, the hydrogen electrode of the electrolytic unit is reduced because of exposure to a reducing atmosphere. However, when the hydrogen electrode is oxidized and degradation has progressed during electrolysis is not performed, it is difficult to fully restore performance of the electrolytic unit even if the hydrogen electrode is exposed to the reducing atmosphere during electrolysis.

Due to the above circumstances, it is not easy to stably and efficiently produce hydrogen when electrolysis is performed using electric power from renewable energy. Similarly, when electrolysis is performed using electric power other than the electric power from renewable energy, it may not be easy to stably and efficiently produce hydrogen because the hydrogen electrode of the electrolytic unit may extremely degrade when the hydrogen electrode is exposed to the oxidation atmosphere for a long time.

Therefore, the problem to be solved by the present invention is to provide a hydrogen production apparatus and a hydrogen production method capable of stably and efficiently producing hydrogen.

BRIEF DESCRIPTION OF THE DRAWINGS

FIG. 1 is a block diagram schematically illustrating an overall configuration of a hydrogen production apparatus 1 according to an embodiment.

FIG. 2 is a flow chart illustrating operation of an electrolysis power controller 100 in the hydrogen production apparatus 1 according to the embodiment (operation when electric power is supplied from an electric power source 10 to an electrolytic unit 20).

FIG. 3 is a flow chart illustrating operation of the electrolysis power controller 100 in the hydrogen production apparatus 1 according to the embodiment (operation when electric power is not supplied from the electric power source 10 to the electrolytic unit 20).

DETAILED DESCRIPTION

A hydrogen production apparatus of an embodiment includes an electrolytic unit and an electrolysis power controller. The electrolytic unit produces hydrogen by electrolyzing water (steam) using electric power supplied from an electric power source. The electrolysis power controller controls the supply of electric power from the electric power source to the electrolytic unit. Here, the electrolysis power controller determines whether an unsupplied time during which electric power is not supplied from the electric power source to the electrolytic unit exceeds a predetermined set time, and when the unsupplied time exceeds the set time, the electrolysis power controller starts the supply of electric power from the electric power source to the electrolytic unit.

The present invention can provide a hydrogen production apparatus capable of stably and efficiently producing hydrogen.

**EP 4 144 887 A1**

[A] Configuration

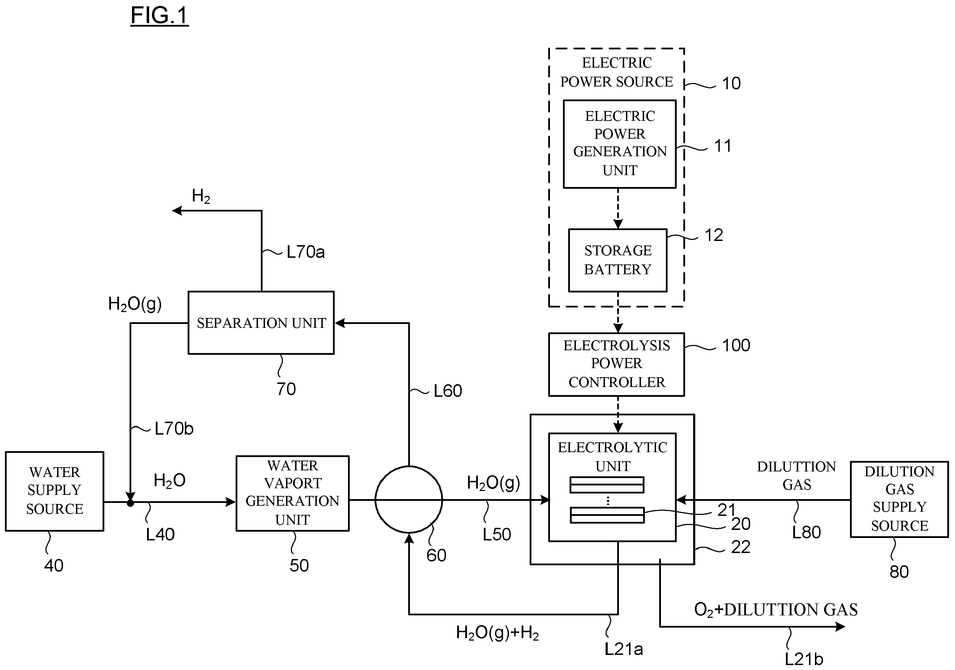

FIG. 1 is a block diagram schematically illustrating an overall configuration of a hydrogen production apparatus 1 according to an embodiment.

As illustrated in FIG. 1, the hydrogen production apparatus 1 of this embodiment includes an electric power source 10, an electrolytic unit 20, and an electrolysis power controller 100 and is configured to produce hydrogen. Each part of the hydrogen production apparatus 1 will be described in turn.

[A-1] Electric power source 10

The electric power source 10 includes an electric power generation unit 11 and a storage battery 12 and is provided to supply electric power to the electrolytic unit 20.

[A-I-I] Electric power generation unit 11

In the electric power source 10, the electric power generation unit 11 is configured to generate electric power using, for example, renewable energy sources (solar, wind power, and other energies). In addition, the electric power generation unit 11 may be configured to generate electric power using fossil fuels instead of renewable energy.

[A-I-2] Storage battery 12

In the electric power source 10, the storage battery 12 is provided to store electric power output from the electric power generation unit 11.

[A-2] Electrolytic unit 20

The electrolytic unit 20 includes electrolysis cell stacks where a plurality of electrolysis cells 21 are stacked and electrically connected in series and is configured to produce hydrogen by electrolyzing steam using electric power supplied from the electric power source 10. The electrolysis cell 21 is, for example, a solid-oxide electrolysis cell, which is configured such that a solid-oxide electrolyte membrane (not illustrated) is interposed between a hydrogen electrode (not illustrated) and an oxygen electrode (not illustrated).

Here, the electrolytic unit 20 is housed in an electrolysis cell stack vessel 22. The electrolysis cell stack vessel 22 is heated, for example, by an electric heater (not illustrated) so that an interior is maintained at a temperature of about 600 to 800°C.

In the electrolytic unit 20, steam is supplied to the hydrogen electrode of the electrolysis cell 21 as a raw material for hydrogen production. In addition, dilution gas is supplied to the oxygen electrode of the electrolysis cell 21 in the electrolytic unit 20. Power is supplied from the storage battery 12 which constitutes the electric power source 10 to the electrolytic unit 20 through the electrolysis power controller 100. As a result, electrolysis is performed in the electrolysis cell 21, whereby hydrogen is produced at the hydrogen electrode and oxygen is produced at the oxygen electrode.

Concretely, the steam supplied to the hydrogen electrode of the electrolysis cell 21 is steam, which is generated by heating water supplied from a water supply source 40 to a steam generation unit 50 through a pipe L40, in the steam generation unit 50. The steam generated in the steam generation unit 50 then flows through a pipe L50 (raw material supply line) where a heat exchanger 60 is provided to the hydrogen electrode of the electrolysis cell 21 that constitutes the electrolytic unit 20. Hydrogen produced at the hydrogen electrode by the electrolysis of steam is then mixed with steam that has not been electrolyzed to be a mixed medium and flows through a pipe L21a (product discharge line) to the heat exchanger 60. In the heat exchanger 60, the mixed medium flowing in from the pipe L21a flows into a separation unit 70 through a pipe L60 after exchanging heat with the steam flowing through the pipe L50. In the separation unit 70, the mixed medium is separated into hydrogen and steam. The hydrogen separated in the separation unit 70 is discharged to an outside of the separation unit 70 through a pipe L70a and, for example, stored. On the other hand, the steam separated in the separation unit 70 flows into the pipe L40 and is mixed with the water flowing from the water supply source 40 through the pipe L40.

The steam that flows into the hydrogen electrode of the electrolytic unit 20 as a raw material preferably contains hydrogen gas to prevent oxidation of the hydrogen electrode. For example, a molar concentration of the hydrogen gas in the raw material is preferably 0.5 mol% or more. In particular, the molar concentration of the hydrogen gas is preferably 5 mol% or more and 50 mol% or less, and more preferably 10 mol% or more and 30 mol% or less. For example, it is preferable to constitute such that the hydrogen gas is mixed between the electrolysis cell stack vessel 22 and the heat exchanger 60 in the pipe L50.

The dilution gas supplied to the oxygen electrode of the electrolysis cell 21 is gas containing oxygen, for example,

3

air. The dilution gas is supplied from a dilution gas source 80 through a pipe L80 (dilution gas supply line) to, for example, the oxygen electrode of the electrolysis cell 21. The dilution gas is supplied to dilute the oxygen produced by electrolysis at the oxygen electrode. Mixed gas of the dilution gas and oxygen produced at the oxygen electrode is discharged to the outside of the electrolysis cell 21 through a pipe L21b (produced oxygen discharge line).

[A-3] Electrolysis power controller 100

The electrolysis power controller 100 is provided to control supply of electric power from the electric power source 10 to the electrolytic unit 20. Although it is not illustrated, the electrolysis power controller 100 includes, for example, an arithmetic unit (not illustrated) and a memory device (not illustrated) and is configured to control each operation by the arithmetic unit performing arithmetic processing using a program stored in the memory device.

Here, the electrolysis power controller 100 adjusts a waveform of current or voltage of electric power from the storage battery 12, which constitutes the electric power source 10, and outputs the current or voltage whose waveform is adjusted to the electrolytic unit 20. The electric power supplied to the electrolytic unit 20 has a waveform of current or voltage of at least one of square wave, sine wave, or triangular wave. In particular, the square wave is preferable. The reason why the square wave is preferred is as follows. Since steam electrolysis is an endothermic reaction, a cell temperature decreases as the current applied to a cell increases. When the current is further increased, an exothermic reaction due to ohmic potential drop of the cell exceeds heat absorption, and the cell temperature rises. Then, heat absorption and heat generation are balanced at a thermoneutral voltage. The thermoneutral voltage is a theoretically calculated value that is approximately 1.3 V. A thermal load applied to the cell can be made smaller, and cell degradation can be suppressed by setting the electric power supplied to the electrolytic unit 20 as a square wave input, with an output being a current whose voltage is obtained by multiplying the number of cells constituting the stack with 1.3 V, which is the thermoneutral voltage.

The electrolysis power controller 100 adjusts a value of a maximum output according to the constitution of the electrolysis cell stack (the number of stacks, the number of cells, an electrode area of the cell, and the like) that constitutes the electrolytic unit 20.

Concretely, when the electrolysis power controller 100 controls the current of the electric power from the electric power source 10 to the electrolytic unit 20, it is preferable that a value $Q_{max}$ and a value $Q_x$ satisfy a relationship expressed in (Inequality 3) below where the value $Q_{max}$ [mol/s] (maximum theoretical hydrogen production rate) is calculated by a maximum current $A_{max}$ [A] added to a single electrolysis cell 21, the number of electrolysis cells 21 N [sheets] constituting the electrolytic unit 20 (electrolysis cell stack), and Faraday constant F [96485 C/ mol] as expressed in (Equation 1) below, and the value $Q_x$ (raw material supply rate to the single electrolysis cell 21) is calculated by a raw material supply rate $Q_{total}$ [mol/s] to the electrolytic unit 20 and the number of electrolysis cells 21 N [sheets] constituting the electrolytic unit 20 as expressed in (Equation 2) below. When this relationship is not satisfied, the electrolysis cell 21 may be damaged when the raw material, steam, is locally depleted in the electrolytic unit 20. However, the occurrence of this problem can be effectively suppressed by satisfying the above relationship.

$$Q_{max} = (A_{max} \cdot N)/2F \quad \dots \text{(Equation 1)}$$

$$Q_x = Q_{total}/N \quad \dots \text{(Equation 2)}$$

$$100(Q_{max}/Q_x) < 90 \quad \dots \text{(Inequality 3)}$$

In this embodiment, the electrolysis power controller 100 is configured to control the supply of electric power from the electric power source 10 to the electrolytic unit 20 according to a supply time (operation time) during which the electric power from the electric power source 10 to the electrolytic unit 20 is supplied, and an unsupplied time (standby time) during which the electric power from the electric power source 10 to the electrolytic unit 20 is not supplied.

[B] Operation

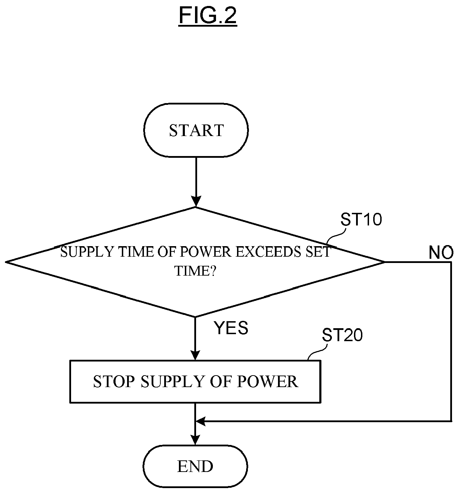

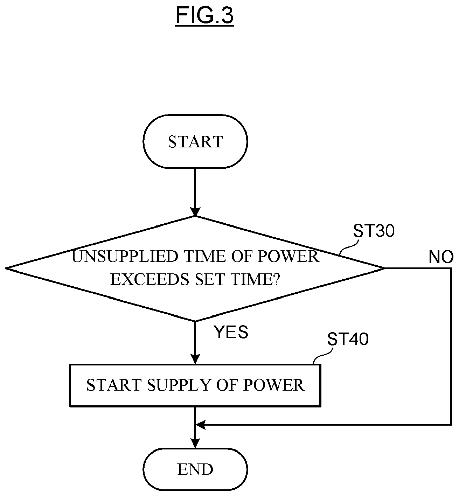

Operation of the electrolysis power controller 100, which constitutes the hydrogen production apparatus 1 of this embodiment, is described using FIG. 2 and FIG. 3.

FIG. 2 and FIG. 3 are flow charts illustrating operation of the electrolysis power controller 100 in the hydrogen production apparatus 1 of the embodiment. FIG. 2 illustrates the operation when electric power is supplied from the electric power source 10 to the electrolytic unit 20 and FIG. 3 illustrates the operation when electric power is not supplied from the electric power source 10 to the electrolytic unit 20.

[B-1] Operation when electric power is supplied from electric power source 10 to electrolytic unit 20

As illustrated in FIG. 2, when the electric power is supplied from the electric power source 10 to the electrolytic unit 20, it is determined whether the supply time during which the electric power is supplied from the electric power source 10 to the electrolytic unit 20 exceeds a predetermined set time (ST 10).
When the supply time does not exceed the set time (No), the supply of electric power from the electric power source 10 to the electrolytic unit 20 continues. That is, the electrolytic unit 20 continues electrolysis.
On the other hand, when the supply time exceeds the set time (Yes), the supply of electric power from the electric power source 10 to the electrolytic unit 20 is stopped (ST20). That is, the electrolytic unit 20 stops electrolysis.

[B-2] Operation when electric power is not supplied from electric power source 10 to electrolytic unit 20

As illustrated in FIG. 3, when the electric power is not supplied from the electric power source 10 to the electrolytic unit 20, it is determined whether the unsupplied time during which the electric power is not supplied from the electric power source 10 to the electrolytic unit 20 exceeds a predetermined set time (ST30).
When the unsupplied time does not exceed the set time (No), the state where the electric power is not supplied from the electric power source 10 to the electrolytic unit 20 is kept. That is, the electrolytic unit 20 continues to stop electrolysis.
On the other hand, when the unsupplied time exceeds the set time (Yes), the supply of electric power from the electric power source 10 to the electrolytic unit 20 is started (ST40). That is, the electrolytic unit 20 starts electrolysis.
The set time for the unsupplied time is arbitrarily set according to properties of the electrolytic unit 20. The set time for the unsupplied time is set to a time when the hydrogen electrode of the electrolytic unit 20 is oxidized and degraded at a low rate. For example, the set time for the unsupplied time is one hour or less, preferably within 10 minutes, and more preferably within 10 seconds.
The set time for the supply time is arbitrarily set according to the properties of the electrolytic unit 20 and properties of the storage battery 12 that constitutes the electric power source 10. The set time for the supply time is preferably shorter than the set time for the unsupplied time.

[C] Summary

As already mentioned, when the electric power from the electric power source 10 to the electrolytic unit 20 is not supplied and the electrolytic unit 20 continues to remain in a state in which electrolysis is not performed, the hydrogen electrode of the electrolytic unit 20 may degrade extremely due to oxidation.
However, in the hydrogen production apparatus 1 of this embodiment, the electrolysis power controller 100 determines whether the unsupplied time during which the electric power from the electric power source 10 to the electrolytic unit 20 is not supplied exceeds the predetermined set time, and when the unsupplied time exceeds the set time, the supply of electric power from the electric power source 10 to the electrolytic unit 20 is started. That is, in this embodiment, when the unsupplied time during which the electric power from the electric power source 10 to the electrolytic unit 20 is not supplied exceeds the set time, the electrolytic unit 20 automatically changes from the state in which electrolysis is not performed to the state in which electrolysis is performed.
Therefore, the extreme degradation of the hydrogen electrode in the electrolytic unit 20 can be prevented in this embodiment.

<Others>

While certain embodiments have been described, these embodiments have been presented by way of example only, and are not intended to limit the scope of the inventions. Indeed, those novel embodiments may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

REFERENCE SIGNS LIST

1: hydrogen production apparatus, 10: electric power source, 11: electric power generation unit, 12: storage battery, 20: electrolytic unit, 21: electrolysis cell, 22: electrolysis cell stack vessel, 40: water supply source, 50: steam generation unit, 60: heat exchanger, 70: separation unit, 80: dilution gas source, 100: electrolysis power controller, L21a:

pipe, L21b: pipe, L40: pipe, L50: pipe, L60: pipe, L70a: pipe, L80: pipe

**Claims**

1. A hydrogen production apparatus, comprising:

   an electrolytic unit for producing hydrogen by electrolyzing steam using electric power supplied from an electric power source, and
   an electrolysis power controller for controlling the supply of electric power from the electric power source to the electrolytic unit, wherein
   the electrolysis power controller determines whether an unsupplied time during which electric power from the electric power source to the electrolytic unit is not supplied exceeds a predetermined set time, and when the unsupplied time exceeds the set time, the electrolysis power controller starts the supply of electric power from the electric power source to the electrolytic unit.

2. The hydrogen production apparatus according to claim 1, wherein
   the electric power supplied to the electrolytic unit has a waveform of current or voltage of at least one of square wave, sine wave, or triangular wave.

3. The hydrogen production apparatus according to claim 1 or claim 2, wherein

   the electrolytic unit includes electrolysis cell stacks where a plurality of electrolysis cells are stacked,
   the electrolysis power controller is configured to control current of electric power from the electric power source to the electrolytic unit, and
   a value $Q_{max}$ and a value $Q_x$ satisfy a relationship expressed in (Inequality 3) below where the value $Q_{max}$ is calculated by a maximum current $A_{max}$ [A] added to a single electrolysis cell, the number of electrolysis cells N constituting the electrolytic unit, and Faraday constant F as expressed in (Equation 1) below, and the value $Q_x$ is calculated by a raw material supply rate $Q_{total}$ to the electrolytic unit and the number of electrolysis cells N constituting the electrolytic unit as expressed in (Equation 2) below.

$$Q_{max} = (A_{max} \cdot N)/2F \qquad ... \text{(Equation 1)}$$

$$Q_x = Q_{total}/N \qquad ... \text{(Equation 2)}$$

$$100(Q_{max}/Q_x) < 90 \qquad ... \text{(Inequality 3)}$$

4. A hydrogen production method that produces hydrogen by electrolyzing steam using electric power supplied from an electric power source, comprising:
   determining whether an unsupplied time during which electric power from the electric power source to an electrolytic unit is not supplied exceeds a predetermined set time, and starting the supply of electric power from the electric power source to the electrolytic unit when the unsupplied time exceeds the set time.

# FIG.1

EP 4 144 887 A1

FIG.2

```
        START
          │
          ▼
  ST10 ┌──────────────┐  NO
       │ SUPPLY TIME OF │────────────┐
       │ POWER EXCEEDS  │            │
       │ SET TIME?      │            │
       └──────────────┘            │
          │ YES                     │
          ▼                         │
  ST20 ┌──────────────┐            │
       │ STOP SUPPLY   │            │
       │ OF POWER      │            │
       └──────────────┘            │
          │                         │
          ▼                         │
        END ◄───────────────────────┘
```

# FIG.3

START

ST30
UNSUPPLIED TIME OF POWER
EXCEEDS SET TIME? — NO

YES

ST40
START SUPPLY OF POWER

END

Europäisches
Patentamt
European
Patent Office
Office européen
des brevets

# EUROPEAN SEARCH REPORT

Application Number

EP 22 17 5117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/040310 A1 (KOMAI MASAFUMI [JP] ET AL) 11 February 2016 (2016-02-11) | 1-3 | INV. C25B1/042 C25B15/02 |
| A | * claim 1 * <br> * claim 4 * <br> * figure 2 * <br> * paragraph [0052] * <br> ----- | 4 | |
| A | WO 2020/201485 A1 (DYNELECTRO APS [DK]) 8 October 2020 (2020-10-08) * the whole document * <br> ----- | 1-4 | |

**TECHNICAL FIELDS SEARCHED (IPC)**

C25B

The present search report has been drawn up for all claims

| Place of search | Date of completion of the search | Examiner |
|---|---|---|
| Munich | 27 January 2023 | Thorner, Gentien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 17 5117**

This annex lists the patent family members relating to the patent documents cited in the above-mentioned European search report.
The members are as contained in the European Patent Office EDP file on
The European Patent Office is in no way liable for these particulars which are merely given for the purpose of information.

**27-01-2023**

| Patent document cited in search report | | Publication date | Patent family member(s) | | Publication date |
|---|---|---|---|---|---|
| US 2016040310 | A1 | 11-02-2016 | AR     102329 | A1 | 22-02-2017 |
|  |  |  | CA    2899581 | A1 | 08-02-2016 |
|  |  |  | DK    2982778 | T3 | 26-03-2018 |
|  |  |  | EP    2982778 | A1 | 10-02-2016 |
|  |  |  | JP    6363425 | B2 | 25-07-2018 |
|  |  |  | JP 2016037643 | A | 22-03-2016 |
|  |  |  | US 2016040310 | A1 | 11-02-2016 |
| WO 2020201485 | A1 | 08-10-2020 | AU 2020251188 | A1 | 07-10-2021 |
|  |  |  | CA    3133432 | A1 | 08-10-2020 |
|  |  |  | CL 2021002563 | A1 | 01-07-2022 |
|  |  |  | CN  113677828 | A | 19-11-2021 |
|  |  |  | EP    3719171 | A1 | 07-10-2020 |
|  |  |  | EP    3947779 | A1 | 09-02-2022 |
|  |  |  | JP 2022527649 | A | 02-06-2022 |
|  |  |  | MA     55496 | A | 09-02-2022 |
|  |  |  | US 2022205121 | A1 | 30-06-2022 |
|  |  |  | WO 2020201485 | A1 | 08-10-2020 |
|  |  |  | ZA    202107222 | B | 31-08-2022 |

EPO FORM P0459

For more details about this annex : see Official Journal of the European Patent Office, No. 12/82